# EUROPÄISCHE PATENTSCHRIFT

(11) **EP 0 749 008 B1**
(45) Veröffentlichungstag und Bekanntmachung des Hinweises auf die Patenterteilung: **01.09.1999**
(21) Anmeldenummer: 96109370.5
(22) Anmeldetag: 12.06.1996
(51) Int. Cl.: G01L 7/16, G01L 17/00, G01L 19/08, G01L 19/10, G01L 19/14

(54) **Anzeigevorrichtung**
Indicating device
Dispositif d'indication

(30) Priorität: 14.06.1995 DE 19522786
(43) Veröffentlichungstag der Anmeldung: 18.12.1996
(73) Patentinhaber: innovative technik marketing (itm), 41844 Wegberg-Merbeck (DE)
(72) Erfinder: Thanscheidt, Günter, 40721 Hilden (DE)
(74) Vertreter: Ackmann, Günther, Dr.-Ing.

(56) Entgegenhaltungen:
- DE-A- 4 302 371
- US-A- 2 329 039
- US-A- 3 975 959
- US-A- 4 768 460
- PATENT ABSTRACTS OF JAPAN vol. 016, no. 424 (P-1415), 7.September 1992 & JP 04 145335 A (MOTOYUKI TOMITA), 19.Mai 1992,

## Beschreibung

Die Erfindung betriffl eine Anzeigenvorrichtung, insbesondere zur Verwendung als Manometer, mit einem Gehäuse, welches eine Eintrittsöffnung für das zu messende Druckmedium und einen federbelasteten Kolben aufweist, welcher durch das Druckmedium beaufschlagbar ist, wobei der Steuerkolben mit einem Anzeigeelement über eine Nut-Federkombination in Wirkverbindung steht,

Anzeigevorrichtungen für Drucksysteme werden überall dort benötigt, wo ein Mindestdruck nicht unterschritten und ggfs. ein Maximalwert nicht überschritten werden darf. Zur laufenden Kontrolle der verschiedenen Drucksysteme sind daher Anzeigevorrichtungen, beispielsweise als Manometer, notwendig, welche einerseits fest installiert und mit dem Drucksystem fest verbunden sein können und andererseits als Einzelgeräte verwendet werden und wahlweise mit dem zu überprüfenden Drucksystem über eine Verbindungsleitung und einen zugehörigen Adapteranschluß verbunden werden.

Die einfachsten Luftdrucksysteme sind beispielsweise Luftkissen, Schlauchboote, Fahrrad- oder Autoreifen, welche durch eine manuelle oder motorisch angetriebene Luftpumpe aufgeblasen werden. Eine Kontrolle des Luftdruckes erfolgt in der Regel über ein einzelnes Manometer, welches über einen Ventilanschluß mit dem Druckluftsystem verbindbar ist. Nachteilig wirkt sich hierbei aus, daß bei separaten Manometern eine Messung nur dann vorgenommen werden kann, wenn der eigentliche Pumpvorgang unterbrochen wird und die Luftpumpe vom Ventilanschluß entfernt wird. Zur Einstellung eines exakten Luftdruckes kann es daher erforderlich sein, ggfs. mehrmals den Pumpvorgang zu unterbrechen, um eine Druckkontrolle vorzunehmen.

Besondere Drucksysteme, wie beispielsweise Luft-Federungs-Systeme an Fahrradgabeln dürfen darüber hinaus keinen Druckverlust beim Messen erfahren, so daß hinsichtlich des angewendeten Druckmeßverfahrens besondere Maßnahmen getroffen werden müssen.

Desweiteren besitzen die vorgenannten Druckluftsysteme in der Regel einen unterschiedlichen Ventilanschluß, beispielsweise wird für Autoreifen ein Schrader-Ventil und für Fahrräder ein Sclaverand-Ventil eingesetzt. Aufgrund der unterschiedlichen Ausführungen der Ventile ist es daher erforderlich, daß ein Manometer über entsprechende Adapteranschlüsse verfügt, oder daß mehrere unterschiedliche Manometer für den jeweiligen Anwendungsfall bereitgestellt werden.

Die Baugröße der Manometer spielt im weiteren eine wesentliche Rolle. Die bekannten Manometer sind zur Erzielung einer sehr großen Genauigkeit entweder sehr schwer und unhandlich oder erreichen eine Baugröße, die einen direkten Einbau in beispielsweise einer Handluftpumpe nicht ermöglichen.

Aus der US 3,975,959 ist ein Manometer bekannt, welches zum Anschluß von Druckleitungen zur ständigen Druckanzeige vorgesehen ist. Dieses Manometer besteht beispielsweise aus einem in einem Druckraum gelagerten Kolben, der federbeaufschlagt in einer Grundstellung gehalten ist. Der Kolben wird bei Druckbeaufschlagung im Druckraum gegen die Federkraft bewegt und die Zeiger auf der vorhandenen Skala zeigen den entsprechenden Druck an. Die Ankopplung des Zeigers an den Druckkolben erfolgt einerseits durch eine Hülse mit einem dreieckförmigen Zapfen und andererseits über eine spiralförmige Nut in der Außenfläche des Kolbens. Hierbei wird der Zapfen der Hülse in der Nut des Kolbens gleitend geführt, was durch die ortsfeste Halterung der Hülse zu einer Verdrehung des Zeigers führt. Nachteilig bei dieser Art von Manometer ist, daß dieses ausschließlich für Druckleitungen vorgesehen und nur stationär montiert werden kann. Ebenso fehlt eine mögliche Regulierung des vorhandenen Druckes, weil das Manometer nur als reines Anzeigeelement konstruiert wurde.

Aus der US 4,768,460 ist im Weiteren ein Druckmanometer bekannt, welches zum Messen des Druckes an einem Ventil, beispielsweise eines Auto- oder Fahrradreifens, vorgesehen ist. Die Druckanzeige erfolgt über eine kolbenförmige Hülse, die durch eine Feder beaufschlagt in einer Grundstellung fixiert ist. Unter Druck wird der Kolben entgegen der Federkraft nach unten gedrückt, wodurch eine auf seiner äußeren Mantelfläche befindliche Skala über ein Sichtfenster ablesbar wird. Diese Manometerausführung weist darüber hinaus am Einlaß ein Einwegeventil auf, so daß der Druck auch nach der Demontage ablesbar bleibt. Eine Regulierung des Druckes ist über ein seitlich angeordneten Druckknopf möglich. Dieses Manometer weist lediglich einen einzelnen Druckraum auf, der durch das Druckmedium beaufschlagbar ist und ist als Einzelprüfgerät konzipiert, wobei es eine extrem lange axiale Bauform aufweist, welche aufgrund der vorgesehenen Handhabung notwendig, jedoch für andere Einsatzzwecke nicht verwendbar ist.

Der Erfindung liegt daher die Aufgabe zugrunde, eine Anzeigevorrichtung zu schaffen, welche eine besonders kompakte Bauform ermöglicht und eine kontinuierliche Messung des Druckes mit geringen Toleranzen während des Pumpvorganges ermöglicht.

Erfindungsgemäß ist zur Lösung der Aufgabe vorgesehen, daß in axialer Richtung des Steuerkolbens getrennte Druckräume ausgebildet sind, wobei der erste Druckraum auf der der Eintrittsöffnung gegenüberliegenden Seite und der zweite aus Bohrungen bestehende Druckraum auf der der Eintrittsöffnung zugewandten Seite des Steuerkolbens angeordnet und durch eine axiale Bohrung im Steuerkolben miteinander verbunden sind und wobei die Fläche des Steuerkolbens zum ersten Druckraum größer als die Fläche des Steuerkolbens zum zweiten Druckraum ist, wodurch der Steuerkolben bei Druckbeaufschlagung entgegen der Kraft der Druckfeder in der axialen Richtung der kleineren Fläche des Steuerkolbens bewegbar ist.

Dadurch, daß der Steuerkolben über eine Nut-Feder-Kombination in Wirkverbindung mit einem Anzeigeelement steht, kann eine einfache Umsetzung der Kolbenbewegung in eine drehende Bewegung vorgenommen werden, wobei die Möglichkeit besteht, daß eine kompakte und platzsparende Bauweise derart gewählt wird, daß beispielsweise der Steuerkolben koaxial in dem Anzeigeelement angeordnet ist. Das Anzeigeelement, welches nur eine drehende Bewegung ausführt, kann im einfachsten Fall aus einer Hülse bestehen, die auf ihrer Außenfläche mit einer Skalierung und ggfs. einer Beschriftung versehen ist, und mit einer auf dem Gehäuse befindlichen Anzeigemarkierung den jeweiligen Druck anzeigt. Der Steuerkolben kann beispielsweise innerhalb des Anzeigenelementes axial geführt sein, wodurch die axiale und radiale Baugröße erheblich reduziert wird. Der Steuerkolben wird hierbei durch eine Feder mit einer bestimmten Federkonstanten beaufschlagt, welche einen annähernd linearen Meßvorgang über einen größeren Druckbereich ermöglicht und entsprechend dem zu messenden Druckbereich ausgewählt wird.

Durch die Beaufschlagung des Steuerkolbens mit dem Druckmedium wird dieser in einer zylindrischen Führung entsprechend dem vorhandenen Druck gegen die Federkraft axial bewegt, wodurch einerseits eine kontinuierliche Messung des vorhandenen Druckes ermöglicht wird und andererseits der Druckraum nur mit einem sehr kleinen Volumen ausgestattet zu sein braucht, so daß keine großen Druckverluste beim Meßvorgang entstehen.

In weiterer Ausgestaltung der Erfindung ist vorgesehen, daß der Steuerkolben mindestens einen sich zumindest teilweise über die Außenfläche erstreckenden ringförmigen Ansatz aufweist, welcher jeweils in einer spiralförmig angeordneten Nut des Anzeigeelementes geführt ist oder der Steuerkolben mindestens eine spiralförmige Nut aufweist, in welcher jeweils ein sich zumindest teilweise über die Innenfläche erstreckender ringförmiger Ansatz des Anzeigeelementes geführt ist. Beide Ausführungen der Nut-Feder-Kombination führen dazu, daß bei einer axialen Bewegung des Steuerkolbens eine Drehbewegung des Anzeigeelementes, d.h. einer doppelwandigen Anzeigenhülse, erfolgt. Die Nut zur Führung des Ansatzes bzw. der Feder, welche dem Steuerkolben oder dem Anzeigeelement zugeordnet sein kann, weist hierbei die Form einer Spirale auf, welche sich in Axialrichtung erstreckt. Die Steigung der Spirale kann der Länge des Anzeigeelementes angepaßt werden, wobei darauf zu achten ist, daß die Form des ringförmigen Ansatzes des Steuerkolbens oder des Anzeigeelementes an die Steigung der spiralförmigen Nut ebenfalls angepaßt ist und nicht zu einer Verklemmung zwischen Nut und Ansatz führt.

Um eine erleichterte Montage und Demontage der Anzeigevorrichtung zu erreichen, ist vorgesehen, daß das Gehäuse aus einem ringförmigen äußeren Gehäuseteil und einem koaxial innenliegenden Gehäuseeinsatz besteht, wobei mindestens jeweils ein Durchbruch als Sichtfenster im Gehäuseteil und Gehäuseeinsatz deckungsgleich angeordnet sind oder daß das äußere Gehäuseteil transparent ausgeführt ist und der Gehäuseeinsatz mindestens einen Durchbruch als Sichtfenster aufweist, um eine Ablesung der auf der Außenfläche des Anzeigeelementes vorhandenen Skala zu ermöglichen.

Um eine Regulierung des Druckes zu ermöglichen, ist vorgesehen, daß in der Stirnfläche des äußeren Gehäuseteils eine Öffnung zur Aufnahme eines Regelknopfes vorhanden ist, welcher axial beweglich und durch eine Feder beaufschlagt in einer nach außen gedrückten Endstellung gehalten ist, wobei in weiterer Ausgestaltung der Erfindung vorgesehen ist, daß der Regelknopf an seiner Innenseite einen Dichtungsring aufweist, welcher in äußerer Endstellung des Regelknopfes in einer Bohrung zwischen dem Druckraum und einem Freiraum abdichtend angeordnet ist und daß der Dichtungsring bei einer axialen Verschiebung des Regelknopfes nach innen in einem verbreiterten Teilbereich der Bohrung gelangt.

In besonderer Ausgestaltung der Erfindung ist vorgesehen, daß in der gegenüberliegenden Stirnfläche des Gehäuseeinsatzes ein mittig angeordneter Ventilanschluß ausgebildet ist, welcher eine Eintrittsöffnung oder Bohrung aufweist, welche durch eine Ventildichtung als Einwege-Ventil abgedichtet ist und eine Verbindung zum Druckraum aufweist. Durch eine Betätigung des Regelknopfes ist es somit möglich, eine Druckminderung in dem Drucksystem herbeizuführen, weil das Drucksystem über den Ventilanschluß und das Einwege-Ventil mit dem Druckraum selbst verbunden ist.

In weiterer Ausgestaltung der Erfindung ist vorgesehen, daß die vordere Stirnfläche des Ventilanschlußes mindestens einen Zapfen aufweist, so daß durch die besondere Ausgestaltung des Ventilanschlußes der Anzeigevorrichtung die Verwendung des Manometers mit einer speziell konstruierten Adaptervorrichtung besteht, welche mehrere verschiedene Druckluftanschlüsse aufweist und welche über eine Bohrung in der Stirnfläche einen Anschluß der erfindungsgemäßen Anzeigevorrichtung ermöglicht.

Die Erfindung wird anhand der Figuren im weiteren näher erläutert.

Es zeigt
- Fig. 1: eine Draufsicht auf eine Anzeigevorrichtung mit einem Ventilanschluß,
- Fig.2: eine geschnittene Seitenansicht der Anzeigevorrichtung nach der Montage und
- Fig.3: eine geschnittene Seitenansicht des Anzeigeelementes.

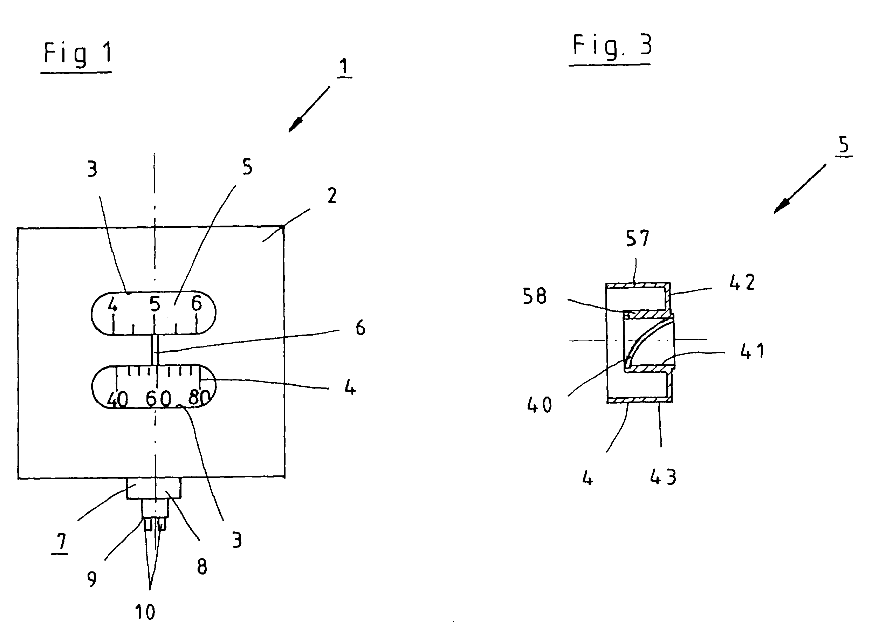

Figur 1 zeigt in einer Seitenansicht eine Anzeigevorrichtung 1, welche beispielsweise zur Messung eines Luftdruckes verwendet werden kann. Die Anzeigevorrichtung 1 besteht aus einem äußeren Gehäuseteil 2, in welches zwei Durchbrüche 3 als Sichtfenster eingearbeitet sind. Die Durchbrüche 3 bestehen aus jeweils einem Langloch, welche in das Gehäuseteils 2 eingefräst sind. Durch die Sichtfenster 3 hindurch besteht die Möglichkeit eine vorhandene Skalierung abzulesen, welche demgegenüber auf einer Außenfläche eines Anzeigeelementes 5 eingefräst oder aufgeklebt ist. Durch eine Markierung 6 zwischen den beiden Sichtfenstern 3 ist der genaue Druckwert ablesbar. Die obere Skala 4 zeigt beispielsweise einen Druck in "Bar" und die untere Skala 4 einen Druck in "PSI" an.

Ferner weist die Anzeigevorrichtung 1 einen Ventilanschluß 7 auf, welcher aus einem mittig angeordneten stufenförmigen Ansatz 8 besteht. An die Stirnfläche 9 des Ansatzes 8 sind zwei diametral gegenüberliegende Zapfen 10 einstückig angeformt, welche zur Öffnung des Ventiles bzw. der Dichtung eines Adapteranschlusses benötigt werden.

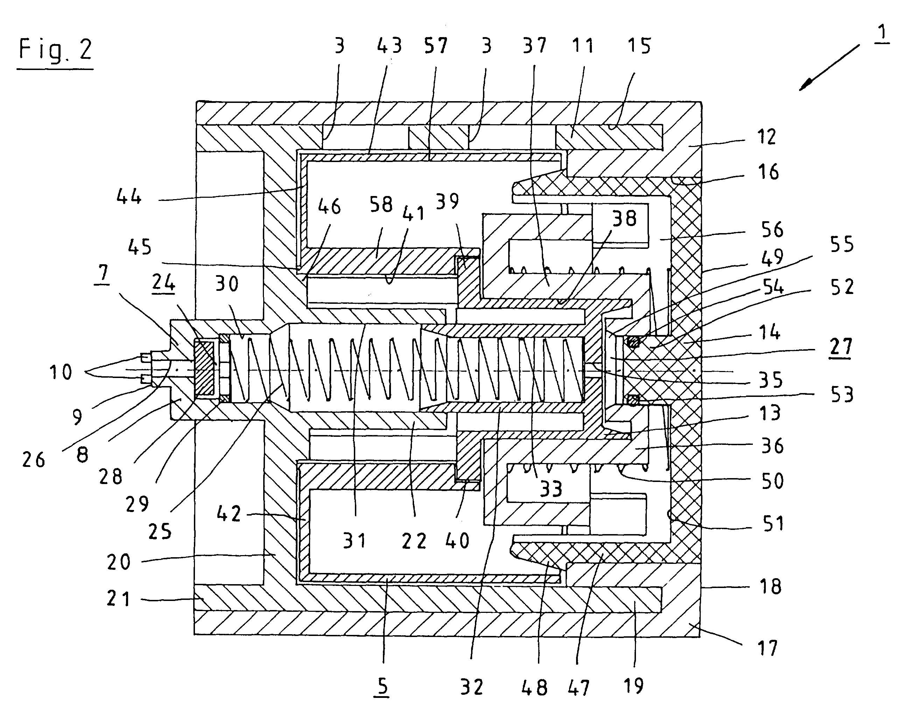

Figur 2 zeigt in einer geschnittenen Seitenansicht die Anzeigevorrichtung 1 nach der Montage. In das Gehäuseteil 2 der Anzeigevorrichtung 1 ist ein zylindrischer Gehäuseeinsatz 11 eingeschoben, welcher zur Aufnahme des Anzeigeelementes 5, eines Steuerkolbens 13 und eines Regelknopfes 14 vorgesehen ist.

Das Gehäuseteil 2 und der Gehäuseeinsatz 11 sowie das Anzeigeelement 5 und der Regelknopf 14 sind koaxial zueinander angeordnet und ermöglichen eine sehr geringe axiale Baulänge, wobei die radiale Baugröße ebenfalls äußerst klein gehalten ist. Der Steuerkolben 13 ist im weiteren koaxial innerhalb des Anzeigeelementes 5 liegend angeordnet.

Das äußere Gehäuseteil 2 ist an einem Ende 12 in Radialrichtung doppelwandig ausgeführt, so daß eine ringförmige förmige Tasche 15 gebildet wird, in welche der ringförmige Gehäuseeinsatz 11 eingeschoben ist. Durch die Doppelwandigkeit des Gehäuseteils 2 entstehen zwei radial angeordnete Schenkel, von denen der längere nach außen gerichtet ist und der kürzere eine kreisrunde Öffnung 16 zur Aufnahme des Regelknopfes 14 bildet. Das Übergangsstück 17 des Gehäuseteils 2 bildet zusammen mit dem Regelknopf 14 die Stirnfläche 18 der Anzeigevorrichtung 1, wobei der Regelknopf 14 in seiner Endstellung bündig mit dem Übergangsstück 17 angeordnet ist.

Der Gehäuseeinsatz 11 ragt mit seinem ringförmigen Ansatz 19 in die Tasche 15 des Gehäuseteils 2 hinein und ist in dieser eingeklemmt oder ggfs. eingeklebt. In dem ringförmigen Ansatz 19 befinden sich ferner zwei Sichtfenster 3, welche eine Durchsicht auf das Anzeigeelement 5 ermöglichen. Das äußere Gehäuseteil 2 kann zu diesem Zweck ebenfalls ein Fenster aufweisen oder alternativ transparent ausgeführt sein. Der Gehäuseeinsatz 11 weist ferner eine radiale Wand 20 auf, welche nach links verschoben außermittig angeordnet ist und einen kurzen nach außen hervorstehenden ringförmigen Ansatz 21 aufweist, der bündig mit dem Gehäuseteil 2 abschließt. An die Wand 20 des Gehäuseeinsatzes 11 ist ferner zu beiden Seiten ein ringförmiger Ansatz 8, 22 angeformt. Der nach innen weisende Ansatz 22 ist zur Aufnahme einer Ventildichtung 24, zur Führung des Steuerkolbens 13 und zur Aufnahme einer Druckfeder 25 vorgesehen. Der nach außen weisende Ansatz 8 des Gehäuseeinsatzes 11 steht gegenüber der Wand 20 und dem Gehäuseteil 2 hervor und ermöglicht den Anschluß an ein Ventil oder eine nicht dargestellte Adaptervorrichtung. Der Ansatz 8 ist wie bereits aus der Figur 1 ersichtlich, abgestuft und weist an der vorderen Stirnfläche 9 zwei Zapfen 10 auf, welche diametral gegenüberliegend angeordnet und zum Öffnen des Ventils oder der Abdichtung der Adaptervorrichtung vorgesehen sind.

Desweiteren weist der Ansatz 8 eine zentrale Bohrung 26 auf, welche durch eine Ventildichtung 24 verschließbar ist und im geöffneten Zustand der Ventildichtung 24 eine Verbindung zum Druckraum 27 des Steuerkolbens 13 öffnet. Die Ventildichtung 24 besteht aus einer Ventilplatte 28 und aus einem Ventilplattenhalter 29 und ist in einem stufenförmig vergrößerten Bohrungsbereich 30 eingesetzt, wobei die Ventilplatte 28 axial beweglich durch den Ventilplattenhalter 29 in dem Bohrungsbereich 30 gehalten wird. Das axiale Spiel der Ventilplatte 28 wird durch den Ventilplattenhalter 29 bestimmt, welcher in einem weiteren Stufenbereich der Bohrung ortsfest eingeklemmt ist. Die Ventildichtung 24 ist als Einwege-Ventil derart ausgebildet, daß das Druckmedium durch die Bohrung 26 in den Druckraum 27 einströmen kann, aber bei einem Überdruck innerhalb des Druckraumes 27 bzw. einem Druckabfall im Druckluftsystem selbsttätig die Bohrung 26 verschließt. Der stufenförmige Bohrungsbereich 30 des Gehäuseeinsatzes 11 geht im weiteren in eine Bohrung 31 über, in welcher ein hohlzylindrischer innerer Ansatz 32 des Steuerkolbens 13 geführt ist. In der Bohrung 33 des Ansatzes 32 und der Bohrung 31 des Ansatzes 22 liegt axial angeordnet eine Druckfeder 25, welche im unbeaufschlagten Zustand den Steuerkolben 13 in seiner äußeren Endstellung hält. Im Falle einer Druckbeaufschlagung des Steuerkolbens 13 wird dieser entgegen der Kraft der Druckfeder 25 in Richtung auf die Ventildichtung 24 bzw. den Ventilanschluß 7 bewegt. Der Druckraum 27 des Steuerkolbens 13 liegt auf der abgewandten Seite des Ansatzes 32 , wobei das Druckmedium durch die Bohrung 31 und 33 hindurch und einer weiteren Bohrung 35 in den Druckraum 27 gelangen kann.

Der Druckraum 27 ist im weiteren durch eine mehrfach abgewinkelte Radialwand 36 des Gehäuses 2 begrenzt, welche im mittleren Bereich topfförmig ausgebildet ist und eine innere Zylinderfläche 38 aufweist, in der der Steuerkolben 13 mit seiner äußeren ringförmigen Wandfläche 37 geführt ist. Die axiale Länge des Steuerkolbens 13 und die Zylinderfläche 38 sind so bemessen, daß eine ausreichende Führung über den axialen Hubweg des Steuerkolbens 13 gewährleistet ist. An das freie Ende der äußeren Wandfläche 37 des Steuerkolbens 13 ist ein ringförmiger Ansatz 39 angeformt, welcher sich über zwei Kreisringsegment erstreckt und eine Feder zur Führung des Steuerkolbens 13 in einer Nut 40 des Anzeigeelementes 5 bildet. Vorteilhafterweise erfolgt die Anordnung derart, daß jeweils zwei Ansätze 39 diametral gegenüberliegen und eine Form aufweisen, die an die Steigung der Nut angepaßt ist, so daß die Ansätze 39 in der Nut 40 ohne verklemmen geführt werden können, welche in die Innenfläche 41 des Anzeigeelementes 5 spiralförmig eingearbeitet ist, wobei es sich bei den Nuten 40 um einzelne diametral gegenüberliegende Spiralabschnitte handelt.

Das Anzeigeelement 5 selbst ist derart doppelwandig ausgeführt, daß zwei koaxial angeordnete Hülsen entstehen, welche miteinander einstückig über eine Radialwand 42 verbunden sind und wobei in die Innenfläche 41 der inneren Hülse die Nut 40 eingearbeitet ist und auf der Außenfläche 43 der äußeren Hülse eine oder mehrere Skalen 4 eingearbeitet oder aufgeklebt sind.

Bei einer Beaufschlagung des Steuerkolbens 13 wird dieser axial in Richtung auf den Ventilanschluß 7 bewegt, wodurch gleichzeitig aufgrund der Wirkverbindung, d.h. der Nut-Feder-Kombination 39, 40 eine Verdrehung des Anzeigeelementes 5 bewirkt wird. Entsprechend der ausgewählten Druckfeder 25 kann eine Eichung der Skala 4 vorgenommen werden, so daß die Druckwerte des Druckmediums beispielsweise in "BAR" und/oder "PSI" angezeigt werden können. Zur Verringerung der Reibung bei der Drehbewegung des Anzeigeelementes 5 weist dieses auf der Stirnfläche 44 einen kleinen ringförmigen Ansatz 45 auf, welcher an der radialen Wand 20 des Gehäuseeinsatzes 11 zu liegen kommt. Eine radiale Führung des Anzeigeelementes 5 wird durch einen Ansatz 46 der radialen Wand 20 erreicht. Die Wand 20 ist im weiteren gegenüber dem Gehäuse 2 nach innen zurückgesetzt angeordnet, um ein Aufstecken der Anzeigevorrichtung 1 auf einen Ventilanschluß bzw. eine nicht dargestellte Adaptervorrichtung zu ermöglichen.

Zur Regulierung des Druckes im Druckraum 27 und damit im Drucksystem ist ein Regelknopf 14 vorgesehen, welcher in der Öffnung 16 des Gehäuseteils 2 axial beweglich gelagert ist. Der Regelknopf 14 besteht aus einem zylindrischen Grundkörper mit einer geschlossenen Stirnfläche, welche zusammen mit dem Gehäuseteil 2 die Stirnfläche 18 der Anzeigevorrichtung 1 bildet. Der Grundkörper weist im weiteren einen ringförmigen Ansatz 47 auf, welcher an seinem freien Ende einen oder mehrere Teilbereiche aufweist, die eine radial nach außen vorspringende Haltenase 48 besitzen. Die Haltenasen 48 greifen durch die mehrfach abgewinkelte Radialwand 36 des Gehäuseteils 2 hindurch und hintergreifen das kürzere Ende des doppelwandigen Bereiches des Gehäuseteils 2 zur Befestigung. Durch die Haltenasen 48 wird die äußere axiale Position des Regelknopfes 14 begrenzt. Durch einen Druck auf die äußere Fläche 49 des Regelknopfes 14 besteht aber durchaus die Möglichkeit, eine Verlagerung in den Innenraum des Gehäuses 2 vorzunehmen, wobei die Kraft einer Feder 50 überwunden werden muß, welche einerseits an dem Regelknopf auf der Innenseite und andererseits abstützend an der Radialwand 36 des Gehäuseteils 2 anliegt. Auf der Innenseite 51 des Regelknopfes 14 ist ferner ein ringförmiger Ansatz 52 einstückig angeformt, welcher eine Nut 53 mit einem eingelegten Dichtungsring 54 auf seiner Axialfläche aufweist. Der Ansatz 52 wird in einer Bohrung 55 geführt, welche mittig in der Radialwand 36 des Gehäuseteils 2 angeordnet ist und über einen konischen Teilbereich 55 in den Druckraum 27 mündet. Eine Abdichtung des Druckraumes 27 nach außen hin erfolgt durch den Dichtungsring 54 in der Nut 53 in der durch die Feder 50 bestimmten äußeren Position des Regelknopfes 14. Bei einer Verlagerung des Regelknopfes 14 nach innen in das Gehäuse 2 wird die Nut 53 in den konischen Teilbereich 55 verschoben, so daß die Dichtwirkung des Dichtungsringes 54 aufgehoben wird. Das Druckmedium kann in diesem Fall aus dem Druckraum 27 in dem Freiraum 56 zwischen dem Regelknopf 14 und der Radialwand 36 des Gehäuseteils 2 gelangen und über die Gleitführung des Regelknopfes 14 ins Freie. Aufgrund der weiteren Verbindung zwischen dem Druckraum 27 und der Bohrung 26 des Ventilanschlußes 7 ist über die Ventildichtung 24 auch eine Druckminderung des zu messenden Druckluftsystems auf diese Art und Weise möglich.

Figur 3 zeigt in einer geschnittenen Seitenansicht das Anzeigeelement 5, welches derart doppelwandig ausgeführt, daß zwei koaxial angeordnete Hülsen 57, 58 entstehen, welche miteinander einstückig über eine Radialwand 42 verbunden sind und wobei in die Innenfläche 41 der inneren Hülse die Nuten 40 eingearbeitet sind und auf der Außenfläche 43 der äußeren Hülse eine oder mehrere Skalen 4 eingearbeitet oder aufgeklebt sind. In den spiralförmig angeordneten Nuten 40, welche sich jeweils nur über einen Teilbereich einer Spirale ausdehnen und spiegelsymmetrisch gegenüberliegend auf der Innenfläche 41 angeordnet sind, werden die Ansätze 39 des Steuerkolbens 13 geführt. Bei einer axialen Bewegung des Steuerkolbens 13 wird somit durch die Ansätze 39 des Steuerkolbens 13 und der Nut 40 die axiale Bewegung des Steuerkolbens 13 in eine Drehbewegung des Anzeigeelementes 5 umgesetzt, welche proportional zum Druck im Druckraum 27 ist.

### Bezugszeichenliste

- 1: Anzeigevorrichtung
- 2: Gehäuse/Gehäuseteil
- 3: Durchbruch/Sichtfenster
- 4: Skala/Skalierung
- 5: Anzeigeelement
- 6: Markierung
- 7: Ventilanschluß
- 8: Ansatz
- 9: Stirnfläche
- 10: Zapfen
- 11: Gehäuseeinsatz
- 12: Ende
- 13: Steuerkolben
- 14: Regelknopf
- 15: Tasche
- 16: Öffnung
- 17: Übergangsstück
- 18: Stirnfläche
- 19: Ansatz
- 20: Wand
- 21: Ansatz
- 22: Ansatz
- 24: Ventildichtung
- 25: Druckfeder
- 26: Bohrung
- 27: Druckraum
- 28: Ventilplatte
- 29: Ventilplattenhalter
- 30: Bohrungsbereich
- 31: Bohrung
- 32: Ansatz
- 33: Bohrung
- 35: Bohrung
- 36: Radialwand
- 37: Wandfläche
- 38: Zylinderfläche
- 39: Ansatz
- 40: Nut
- 41: Innenfläche
- 42: Radialwand
- 43: Außenfläche
- 44: Stirnfläche
- 45: Ansatz
- 46: Ansatz
- 47: Ansatz
- 48: Haltenase
- 49: Fläche
- 50: Feder
- 51: Innenfläche
- 52: Ansatz
- 53: Nut
- 54: Dichtungsring
- 55: Teilbereich
- 56: Freiraum
- 57: Hülse
- 58: Hülse

## Patentansprüche

1. Anzeigevorrichtung (1), insbesondere zur Verwendung als Manometer, mit einem Gehäuse (2), welches eine Eintrittsöffnung für das zu messende Druckmedium und einen federbelasteten Steuerkolben (13) aufweist, welcher durch das Druckmedium beaufschlagbar ist, wobei der Steuerkolben (13) mit einem Anzeigeelement (5) über eine Nut-Federkombination in Wirkverbindung steht,
dadurch gekennzeichnet,
daß in axialer Richtung des Steuerkolbens (13) getrennte Druckräume (27) ausgebildet sind, wobei der erste Druckraum (27) auf der der Eintrittsöffnung gegenüberliegenden Seite und der zweite aus Bohrungen (31, 33) bestehende Druckraum auf der der Eintrittsöffnung zugewandten Seite des Steuerkolbens (13) angeordnet und durch eine axiale Bohrung (35) im Steuerkolben (13) miteinander verbunden sind und wobei die Fläche des Steuerkolbens (13) zum ersten Druckraum (27) größer als die Fläche des Steuerkolbens (13) zum zweiten Druckraum ist, wodurch der Steuerkolben (13) bei Druckbeaufschlagung entgegen der Kraft der Druckfeder (25) in der axialen Richtung der kleineren Fläche des Steuerkolbens (13) bewegbar ist.

2. Anzeigevorrichtung nach Anspruch 1,
dadurch gekennzeichnet,
daß der Steuerkolben (13) mindestens einen sich zumindest teilweise über die Außenfläche erstreckenden ring-förmigen Ansatz (39) aufweist, welcher jeweils in einer spiralförmig angeordneten Nut (40) des Anzeigeelementes (5) geführt ist.

3. Anzeigevorrichtung nach Anspruch 1,
dadurch gekennzeichnet,
der Steuerkolben (13) mindestens eine spiralförmige Nut aufweist, in welcher jeweils ein sich zumindest teilweise über die Innenfläche erstreckender ringförmiger Ansatz des Anzeigeelementes (5) geführt ist.

4. Anzeigevorrichtung nach Anspruch 2 oder 3,
dadurch gekennzeichnet,
daß die Form der ringförmigen Ansätze des Steuerkolbens (13) oder des Anzeigeelementes (5) an die Steigung der spiralförmigen Nut angepaßt ist.

5. Anzeigevorrichtung nach einem der Ansprüche 1 bis 4,
dadurch gekennzeichnet,
daß das Gehäuse aus einem ringförmigen äußeren Gehäuseteil (2) und einem koaxial innenliegenden Gehäuseeinsatz (11) besteht, wobei mindestens jeweils ein Durchbruch (3) als Sichtfenster im Gehäuseteil (2) und Gehäuseeinsatz (11) deckungsgleich angeordnet sind.

6. Anzeigevorrichtung nach einem der Ansprüche 1 bis 4,
dadurch gekennzeichnet,
daß das äußere Gehäuseteil (2) transparent ausgeführt ist und der Gehäuseeinsatz (11) mindestens einen Durchbruch (3) als Sichtfenster aufweist.

7. Anzeigevorrichtung nach einem der Ansprüche 1 bis 6,
dadurch gekennzeichnet,
daß in der Stirnfläche (18) des äußeren Gehäuseteils (2) eine Öffnung (16) zur Aufnahme eines Regelknopfes (14) vorhanden ist, welcher axial beweglich geführt und durch eine Feder (50) beaufschlagt ist.

8. Anzeigevorrichtung nach Anspruch 7,
dadurch gekennzeichnet,
daß der Regelknopf (14) an seiner Innenseite (51) einen Dichtungsring (54) aufweist, welcher in äußerer Endstellung des Regelknopfes (14) in einer Bohrung zwischen dem Druckraum (27) und einem Freiraum (56) abdichtend angeordnet ist und daß der Dichtungsring (54) bei einer axialen Verschiebung des Regelknopfes (14) nach innen in einem verbreiterten Teilbereich (55) der Bohrung gelangt.

9. Anzeigevorrichtung nach einem der Ansprüche 1 bis 8,
dadurch gekennzeichnet,
daß in der gegenüberliegenden Stirnfläche des Gehäuseeinsatzes (11) ein mittig angeordneter Ventilanschluß (7) ausgebildet ist, welcher eine Eintrittsöffnung oder Bohrung (26) aufweist, welche eine Verbindung zum Druckraum aufweist und daß die Ventildichtung (24) als Einwege-Ventil ausgebildet ist.

10. Anzeigevorrichtung nach einem der Ansprüche 1 bis 9,
dadurch gekennzeichnet,
daß die vordere Stirnfläche (9) des Ventilanschlußes (7) mindestens einen Zapfen (10) aufweist.

11. Anzeigevorrichtung nach einem der Ansprüche 1 bis 10,
dadurch gekennzeichnet,
daß der Ventilanschluß (7) zur Aufnahme in eine Adaptervorrichtung vorgesehen ist.

## Claims

1. A display device (1), in particular for use as a manometer, with a housing (2) having an inlet orifice for the pressure medium to be measured and with a spring-loaded control piston (13) on which the pressure medium can act, with the control piston (13) being in operative connection with a display element (5) by way of a tongue-and-groove combination, characterized in that separate pressure spaces (27) are provided in the axial direction of the control piston (13), with the first pressure space (27) being arranged on the side opposite the inlet orifice, and the second pressure space consisting of bores (31, 33) being arranged on the side of the control piston (13) facing the inlet orifice, with the two pressure spaces being joined by an axial bore (35) in the control piston (13), with the area of the control piston (13) to the first pressure space (27) being greater than the area of the control piston (13) to the second pressure space, so that, under the influence of a pressure acting on the control piston (13), the piston can be moved in the axial direction of the smaller area of the control piston (13) against the force of the compression spring (25).

2. A display device according to Claim 1, characterized in that the control piston (13) has at least one annular shoulder (39) which extends at least partially over the outside surface and is guided in a spiral groove (40) of the display element (5) respectively.

3. A display device according to Claim 1, characterized in that the control piston (13) has at least one spiral groove in which is guided an annular shoulder of the display element (5) which extends at least partially over the inside surface.

4. A display device according to Claim 2 or 3, characterized in that the shape of the annular shoulders of the control piston (13) or of the display element (5) is adapted to the pitch of the spiral groove.

5. A display device according to one of Claims 1 through 4, characterized in that the housing consists of an annular outside housing part (2) and a housing insert (11) coaxially with it on the inside, with at least one passage (3) being arranged as an inspection window in the housing part (2) coinciding with that in the housing insert (11).

6. A display device according to one of Claims 1 through 4, characterized in that the outside housing part (2) is designed to be transparent, and the housing insert (11) has at least one passage (3) as an inspection window.

7. A display device according to one of Claims 1 through 6, characterized in that an orifice (16) is provided in the end face (18) of the outer housing part (2) to accommodate a control knob (14) which is guided axially movable and is acted upon by a spring (50).

8. A display device according to claim 7, characterized in that the control knob (14) has on its inside (51) a ring gasket (54) which is arranged in a bore between the pressure space (27) and a clearance (56), thereby sealing it, in the outer end position of the control knob (14), and the ring gasket (54) enters a widened partial area (55) of the bore with an axial displacement of the control knob (14) inward.

9. A display device according to one of Claims 1 through 8, characterized in that in the opposite end face of the housing insert (11), a valve connection (7) is provided centrally, having an inlet orifice or a borehole (26) which has a connection to the pressure space and that the valve gasket (24) is designed as a one-way valve.

10. A display device according to one of Claims 1 through 9, characterized in that the front end face (9) of the valve connection (7) has at least one peg (10).

11. A display device according to one of Claims 1 through 10, characterized in that the valve connection (7) is provided for accommodation in an adapter device.

## Revendications

1. Dispositif d'affichage (1), en particulier pour utilisation comme manomètre, comprenant un boîtier (2) qui présente une ouverture d'entrée pour le fluide comprimé à mesurer, et un piston de (13) chargé par ressort, qui peut être actionné par le fluide comprimé, le piston de commande (13) étant relié fonctionnellement à un élément d'affichage (5) par l'intermédiaire d'une combinaison rainure-ressort, caractérisé en ce que dans la direction axiale du piston de commande (13), des chambres de compression (27) séparées sont prévues, la première chambre de compression (27) étant localisée du côté orienté à l'opposé de l'orifice d'entrée, et la seconde chambre de compression (27) constituée de percements (31, 33) étant localisée du côté orienté vers l'orifice d'entrée du piston de commande (13), ces chambres étant en communication entre elles par un percement axial (35) ménagé dans le piston de commande (13), la surface du piston de commande (13) par rapport à la première chambre de compression (27) étant plus grande que la surface du piston de commande (13) par rapport à la seconde chambre de compression, grâce à quoi le piston de commande (13) peut être mis en mouvement dans la direction axiale de la plus petite surface du piston de commande (13), à l'application contre la force opposée par le ressort de compression (25).

2. Dispositif d'affichage selon la revendication 1, caractérisé en ce que le piston de commande (13) présente au moins un rebord annulaire (39) s'étendant au moins partiellement à la surface extérieure, gui est guidé dans une rainure (40) de l'élément d'affichage (5) réalisée sous forme de spirale.

3. Dispositif d'affichage selon la revendication 1, caractérisé en ce que le piston de commande (13) présente au moins une rainure en forme de spirale, dans laquelle est guidé un rebord annulaire de l'élément d'affichage (5), rebord qui s'étend au moins partiellement sur la surface intérieure.

4. Dispositif d'affichage selon la revendication 2 ou 3, caractérisé en ce que la forme des rebords annulaires du piston de commande (13) ou de l'élément d'affichage (5) est adaptée au pas de la rainure en forme de spirale.

5. Dispositif d'affichage selon l'une des revendications 1 à 4, caractérisé en ce que le boîtier se compose d'une partie de boîtier extérieure annulaire (2) et d'un insert de boîtier coaxial (11), des percements (3) coiïncidents étant ménagés dans le partie de boîtier (2) et dans l'insert de boîtier (11) pour servir de fenêtres de regard.

6. Dispositif d'affichage selon l'une des revendications 1 à 4, caractérisé en ce que la partie de boîtier extérieure (2) est transparente et en ce que l'insert de boîtier (11) présente au moins un percement (3) pour servir de fenétre de regard.

7. Dispositif d'affichage selon l'une des revendications 1 à 6, caractérisé en ce qu'on a prévu dans la face frontale (18) de la partie de boîtier extérieure (2) une ouverture (16) dans laquelle est logé un bouton de réglage (14) qui est guidé mobile axialement et qui est sous l'influence d'un ressort (50).

8. Dispositif d'affichage selon la revendication 7, caractérisé en ce que le bouton de réglage (14) présente, sur sa face intérieure (51), un anneau d'étanchéité (54) qui ast placé pour réaliser une étanchéification, dans la position finale extérieure du bouton da réglage (14), dans un percement séparant la chambre de compression (27) et un espace libre (56), la chambre de compression (27) du piston de commande (13), et en ce que lors d'un déplacement axial du bouton de réglage (14) vers l'intérieur, l'anneau d'étanchéité (54) s'avance vers l'intérieur dans une zone partielle élargie (55) du percement.

9. Dispositif d'affichage selon l'une des revendications 1 à 8, caractérisé en ce que dans la face frontale opposée de l'insert de boîtier (11), on a prévu un raccord de soupape (7) gui présente une ouverture d'entrée ou perçage (26) , qui présente une liaison avec la chambre de compression, et que le joint de soupape (24) est configuré a la manière d'une soupape unidirectionelle.

10. Dispositif d'affichage selon l'une des revendications 1 à 9, caractérisé en ce que la face frontale avant (9) du raccord de soupape (7) présente au moins une cheville (10).

11. Dispositif d'affichage selon l'une des revendications 1 à 10, caractérisé en ce que la raccord de soupape (7) est prévu pour être logé dans un adaptateur.
